# EUROPÄISCHE PATENTSCHRIFT

(11) **EP 1 409 854 B1**
(45) Veröffentlichungstag und Bekanntmachung des Hinweises auf die Patenterteilung: **26.12.2007**
(21) Anmeldenummer: 00945628.6
(22) Anmeldetag: 09.06.2000
(51) Int. Cl.: F01L 9/04, F02D 33/02, F02D 13/02

(54) **VERFAHREN ZUM LASTSTEUERNDEN BETRIEB ELEKTROMAGNETISCH BETÄTIGTER EINLASSVENTILE EINER BRENNKRAFTMASCHINE**
METHOD FOR THE LOAD-CONTROLLED OPERATION OF ELECTROMAGNETICALLY ACTUATED INLET VALVES OF AN INTERNAL COMBUSTION ENGINE
PROCEDE DE FONCTIONNEMENT A COMMANDE DE CHARGE DE SOUPAPES D'ADMISSION A ACTIONNEMENT ELECTROMAGNETIQUE DE MOTEURS A COMBUSTION INTERNE

(30) Priorität: 10.06.1999 DE 19926506
(43) Veröffentlichungstag der Anmeldung: 21.04.2004
(73) Patentinhaber: Siemens VDO Automotive AG, 93055 Regensburg (DE)
(72) Erfinder: VOGT, Thomas, D-93049 Regensburg (DE); LEHMANN, Hans, Jörg, 09212 Limbach-Oberfronah (DE); ROSE, Claus, 93096 Köfering (DE)
(86) Internationale Anmeldenummer: PCT/DE2000/001887
(87) Internationale Veröffentlichungsnummer: WO 2000/077349

(56) Entgegenhaltungen:
- EP-A- 0 433 632
- DE-A- 4 300 666
- DE-A- 4 341 945
- DE-A- 19 610 468
- US-A- 5 669 341

## Beschreibung

Die Erfindung betrifft ein Verfahren zum laststeuernden Betrieb elektromagnetisch betätigter Gaswechselventile einer Brennkraftmaschine, die zwei Einlaßventile pro Zylinder aufweist.

Brennkraftmaschinen, deren Gaswechselventile elektromagnetisch betätigt werden, sind bekannt. Im Gegensatz zu nockenwellenbetätigten Ventilen werden diese Ventile zum Öffnen und Steuern in Abhängigkeit von der Drehlage der Kurbelwelle angesteuert; eine feste mechanische Kopplung mit der Kurbelwelle liegt nicht vor. Elektromagnetische Stellglieder für Gaswechselventile sind beispielsweise aus der DE 196 10 468 A1 bekannt. Sie weisen eine zwischen einer geschlossenen und einer offenen Stellung liegende Ruhestellung auf, in der sie von zwei Federn gehalten werden und aus der sie mittels Elektromagneten ausgelenkt werden können.

Durch die Bestromung eines der Elektromagneten kann das Ventil in die jeweilige, dem Elektromagneten zugeordnete Endstellung angezogen und dort gehalten werden. Um das Ventil von einer Endstellung in die andere zu überführen, wird die Bestromung des haltenden Elektromagneten beendet und der andere bestromt, wodurch sich das Ventil unter der Kraft der Federn sowie des eingeschalteten Elektromagneten in die andere Endstellung bewegt. Das Gaswechselventil sowie das Stellglied stellt zusammen mit den Federn einen Feder-Masse-Schwinger dar. Dessen Eigen- oder Resonanzfrequenz ist entscheidend für die Geschwindigkeit, mit der das Ventil zwischen den Endstellungen bewegt werden kann. Durch die physikalischen Gegebenheiten ist eine minimale Stellzeit von einer zur anderen Endstellung vorgegeben, die im Rahmen der technischen Möglichkeiten (beispielsweise zur Verfügung stehender Platz für das Stellglied am Zylinderkopf einer Brennkraftmaschine) nicht über ein gegebenes Maß hinaus verkürzt werden kann.

Eine solche elektromagnetische Gaswechselventilbetätigung hat den Vorteil, daß bei einer gemischansaugenden Otto-Brennkraftmaschine die Laststeuerung direkt durch die Ansteuerung der Betätigung der Einlaßventile erfolgen kann, zumindest in einem weiten Lastbereich. Hierbei ergibt sich jedoch das Problem, daß bei hohen Drehzahlen für einen Betrieb bei kleinen Lasten, also bei kleinen Momenten der Brennkraftmaschine, die physikalisch vorgegebenen minimal erreichbaren Stellzeiten zu lang sind.

Aus der DE 196 10 468 A1 ist es dazu bekannt, den Öffnungshub des Einlaßventils eines Zylinders zu vermindern, indem das Ventil nur kurz aus der Schließstellung in Richtung Offenstellung bewegt und dann gleich wieder in die Schließstellung zurückgestellt wird, ohne je die andere Endstellung erreicht zu haben. Damit wird ein geringerer Strömungsquerschnitt freigegeben als bei voller Ventilöffnung.

Dieses Vorgehen hat jedoch den Nachteil, daß der Schließerelektromagnet stark belastet wird, da er eine Umkehr des von den Federn in die Offenstellung gedrückten Ventils bewirken muß. Dies wird dadurch verschärft, daß in der Regel in der Fangphase der Strom durch den jeweiligen Elektromagneten größer ist als in der Haltephase, in der das Ventil in der Endstellung gehalten wird.

Darüber hinaus ergibt sich eine weitere Schwierigkeit durch das sogenannte "Kleben" des Stellgliedes in einer Endstellung. Dies ist durch die endliche Abbauzeit des Magnetfeldes an einem haltenden Elektromagneten verursacht und hat zur Folge, daß bei Aktivierung eines Elektromagneten eine gewisse Mindesthaltedauer nicht unterschritten werden kann.

Aus der DE 196 10 468 A1 sowie der EP 0 433 632 A ist es ferner bekannt, bei Teillastbetrieb das eine Einlassventil geschlossen zu halten, während das andere Einlassventil den Zylinder mit der erforderlichen Luftmasse versorgt. Dieser Betrieb der Einlassventile ist jedoch dann unbefriedigend, wenn ein Einlassventil allein für eine ordnungsgemäße Füllung des Zylinders nicht ausreicht. Im übrigen ergeben sich auch in diesem Fall die durch das "Kleben" des Stellgliedes bedingten Schwierigkeiten.

Der Erfindung liegt nun die Aufgabe zugrunde, ein Verfahren anzugeben, das die Laststeuerung über die elektromagnetisch betätigten Einlaßventile einer Brennkraftmaschine im Teillastbetrieb, insbesondere bei hohen Drehzahlen, ermöglicht, ohne daß der Schließerelektromagnet überlastet wird oder sich das "Kleben" eines Stellgliedes nachteilig auswirken würde, wobei insbesondere kleine Lasten erreichbar sein sollen.

Diese Aufgabe wird durch das Verfahren nach Anspruch 1 oder Anspruch 2 erreicht.

Erfindungsgemäß wird bei einer Brennkraftmaschine mit zwei Einlaßventilen das erste Einlaßventil so betätigt, daß es einen sogenannten "Freiflug" durchführt. Dabei wird das Ventil von der Schließstellung in die Offenstellung und wieder zurück gestellt, ohne daß der Elektromagnet für die Offenstellung aktiviert wird. Es erreicht also die offene Endstellung, wird dort aber nicht gehalten. Dabei ergibt sich eine Öffnungsdauer dieses ersten Einlaßventils, die unter der für den abzuwickelnden Teillastbetrieb nötigen Öffnungsdauer liegt. Diese zur kurze Öffnungsdauer wird dadurch kompensiert, daß das zweite Einlaßventil länger geöffnet wird als eigentlich erforderlich, wobei der Elektromagnet für das Öffnen betätigt wird, das Ventil in der offenen Endstellung also gehalten wird.

Dieses erfindungsgemäße Konzept ermöglicht es, den an und für sich nicht zugänglichen Bereich zwischen der Ventilöffnungsdauer, die sich bei einem "Freiflug" ergibt und der Mindestöffnungsdauer, die durch die "Klebzeit" begrenzt ist, halbiert werden kann. Damit können bei höheren Drehzahlen erheblich kleinere Lasten bzw. bei gegebener Last erheblich höhere Drehzahlen erreicht werden.

Gemäß der vorteilhaften Weiterbildung nach dem Unteranspruch werden das erste und das zweite Ventil von einem Verbrennungszyklus zu einem nächsten getauscht. Damit wird verhindert, daß sich vor beiden Einlaßventilen eingespritzter Kraftstoff dauerhaft vor einem geschlossenen oder nur kurz betätigten Ventil ansammelt. Durch den alternierenden Betrieb der Einlaßventile wird ein Sprung im Kraftstoff/Luft-Verhältnis des Zylinders verhindert.

Die Erfindung wird nachfolgend unter Bezugnahme auf die Zeichnung näher erläutert.

Die Zeichnung zeigt:
Fig. 1 zwei Wegkurven eines Ventilhubes zur Veranschaulichung der Klebzeit,
Fig. 2 zwei Wegkurven zweier Einlaßventile im Teillastbetrieb bei hohen Drehzahlen,
Fig. 3 zwei Wegkurven zweier Einlaßventile, wobei eines im Freiflug betrieben wird, und
Fig. 4 zwei Wegkurven des Ventilhubes zweier Einlaßventile, wobei ein Einlaßventil geschlossen gehalten wird.

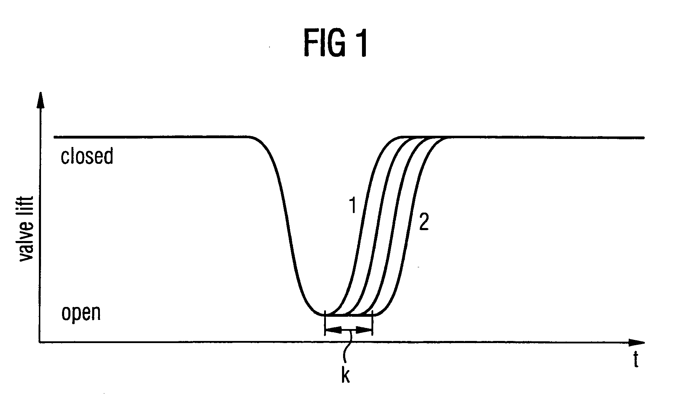

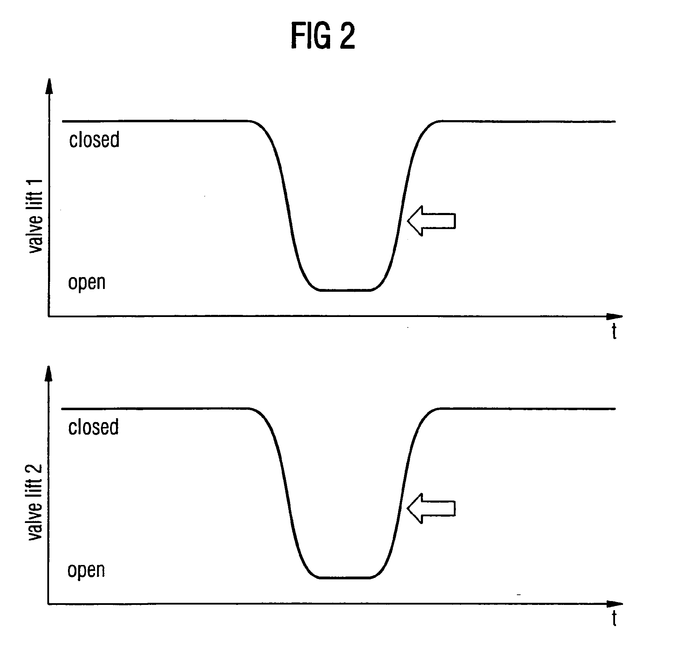

Eine Brennkraftmaschine mit zwei elektromagnetisch betätigten Einlaßventilen, wie sie beispielsweise aus der DE 196 10 468 A1 bekannt sind, wird hinsichtlich ihrer Last durch die Betätigung der Gaswechselventile gesteuert. Bei hohen Drehzahlen und niedrigen Lasten dürfen die Einlaßventile nur kurz geöffnet werden. Fig. 2 zeigt die Wegkurven eines elektromagnetisch betätigten Ventils. Auf der x-Achse ist der Ventilhub valve lift aufgetragen, auf der y-Achse die Zeit t. Das Ventil wird zwischen einer Schließstellung, die in Fig. 1 mit closed bezeichnet ist und einer Offenstellung, die mit open bezeichnet ist, hin und her bewegt. Bei Kurve 1 wird das Ventil in der Offenstellung so kurz wie möglich gehalten. Bei Kurve 2 erfolgt kein Halten in der Offenstellung. Zwischen den Kurven 1 und 2 ist kein kontinuierlicher Übergang möglich, die gestrichelt in Fig. 1 eingetragenen Kurven sind nicht erreichbar. Dies liegt darin, daß das Magnetfeld am in der Offenstellung haltenden Elektromagneten eine endliche Abbauzeit hat. Stellt man die Betätigung des elektromagnetischen Einlaßventils von Kurve 2 auf Kurve 1 um, ergibt sich somit ein Sprung in der Öffnungsdauer, der durch die Zeitdauer k in Fig. 1 dargestellt ist.

Die Steilheit des Öffnungs- bzw. Schließverlaufes ist durch die Resonanzfrequenz des Feder-Masse-Schwinger, den das elektromagnetisch betätigte Gaswechselventil darstellt, physikalisch fest vorgegeben.

Wird eine Brennkraftmaschine mit hohen Drehzahlen bei niedriger Last betrieben, werden die zwei Einlaßventile eines jeden Zylinders mit dem in Fig. 2 dargestellten Wegkurven betrieben. Dabei bezeichnet valve lift 1 den Ventilhub des ersten Einlaßventils und valve lift 2 den Ventilhub des zweiten Einlaßventils. Soll die Brennkraftmaschine nun mit noch geringerer Last, bzw. mit höherer Drehzahl betrieben werden, müßte das Schließen der Einlaßventile auf der Zeitachse in Richtung der dargestellten Pfeile verschoben werden. Dies ist jedoch aufgrund der anhand der Fig. 1 geschilderten Problematik nicht kontinuierlich möglich.

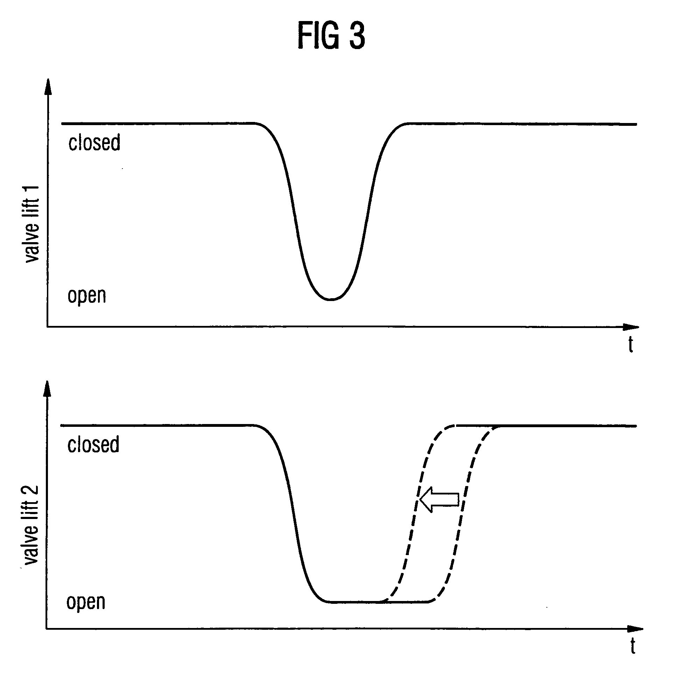

Deshalb wird, wie in Fig. 3 dargestellt das erste Einlaßventil in Freiflug gebracht, was einen stabilen Betriebspunkt für dieses Ventil darstellt. Die dadurch verlorengegangene Öffnungsfläche der Einlaßventile wird durch das zweite Ventil kompensiert, das einen Sprung hin zu größeren Lasten bzw. zu größerer Ventilöffnungsdauer ausführt, wie durch den linken gestrichelten Ventilhub valve lift 2 veranschaulicht ist. Damit ist sichergestellt, daß die Brennkraftmaschine in Summe genau so viel Luft ansaugt, wie zuvor. Um jetzt die Last weiter zu reduzieren bzw. die Drehzahl weiter zu erhöhen, kann durch Verkürzen der Ventilöffnungsdauer des zweiten Ventils die Last weiter reduziert werden, bis dieses wieder an seine Klebgrenze gelangt, was durch den linken gestrichelten Ventilhub valve lift 2 dargestellt ist.

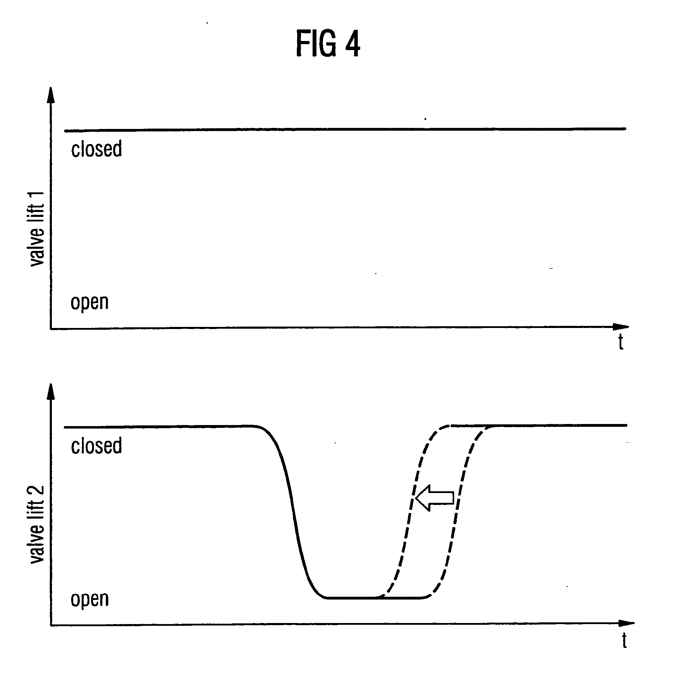

Wird eine weitere Reduktion der Last bzw. eine weitere Erhöhung der Drehzahl gefordert, wird, wie in Fig. 4 dargestellt, ein Ventil nicht mehr betätigt, valve lift 1 verbleibt konstant geschlossen (closed). Dabei springt die Öffnungsdauer des zweiten Ventils wiederum in Richtung längerer Ventilöffnungsdauern, um die verloren gegangene Öffnungsfläche zu kompensieren, was durch den rechten gestrichelten Ventilhub valve lift 2 veranschaulicht ist. Nun kann die Last der Brennkraftmaschine bzw. die Öffnungsdauer des zweiten Ventils weiter gesenkt werden, bis dieses Ventil wieder an seine Klebgrenze gerät, die durch den linken gestrichelten Ventilhub valve lift 2 dargestellt ist.

In der Summe ist somit der durch k in Fig. 1 dargestellte, nicht zugängliche Bereich für die Ventilöffnung halbiert worden. Oder in anderen Worten, der Linearbereich ist verdoppelt.

Dadurch daß elektromagnetisch betätigte Ventile die Möglichkeit bieten, jedes einzelne Ventil an beliebiger Stelle zu öffnen und zu schließen, ist es möglich, die beschriebenen Sprünge in den Steuerzeiten der Ventile zu realisieren.

Bei Brennkraftmaschinen mit Saugrohreinspritzung wird die Kraftstoffeinspritzung vor beide Einlaßventile eingespritzt. Wird ein Ventil, in obiger Beschreibung das erste Ventil mit dem Ventilhub valve lift 1 nicht oder wesentlich kürzer als das andere betätigt, kann sich vor diesem Ventil Kraftstoff ansammeln, was einen Sprung in der Lambdazahl bzw. im Kraftstoff/Luft-Verhältnis dieses Zylinders bedeutete. Um dies zu vermeiden, werden die Ventile alternierend betrieben, d.h. zwischen erstem Ventil und zweitem Ventil wird ständig gewechselt. Das heißt, ein Ventil vollführt wechselnd den Ventilhub, der in den Figuren mit valve lift 1 bezeichnet ist und in einem späteren Verbrennungszyklus den Ventilhub, der mit valve lift 2 bezeichnet ist.

Durch dieses Verfahren sind die Einschränkungen beim Abstimmen einer Brennkraftmaschine gelockert, da eine lineare Einstellung der Last der Brennkraftmaschine, die proportional zur Ventilöffnungsfläche (Fläche über der Wegkurve) ist, in einem weiteren Bereich bewerkstelligt werden kann. Zugleich sind die Anforderungen an die Kürze der Flugzeiten, d.h. der Steilheit des Öffnens bzw. des Schließens gelockert, da man sonst nicht umhin käme, elektromagnetisch betätigte Ventile zu konstruieren, die ein schnelleres Öffnungs- bzw. Schließverhalten zeigen. Dies wäre jedoch konstruktiv vor dem Hintergrund der Rahmenanforderungen bezüglich Bauraum und Fertigungskosten äußerst schwierig.

## Patentansprüche

1. Verfahren zum laststeuernden Betrieb elektromechanisch betätigter Gaswechselventile einer Brennkraftmaschine, die mindestens zwei Einlassventile pro Zylinder aufweist, wobei im Teillastbetrieb
- das erste Einlassventil während eines Öffnungsvorganges in einem freien Durchschwingvorgang aus der Schließstellung in die maximale Offenstellung und wieder in die Schließstellung zurückgestellt wird, ohne in der maximalen Offenstellung gehalten zu werden, so dass sich eine Öffnungsdauer des ersten Einlassventils ergibt, die unter einer mittleren Öffnungsdauer liegt, welche bei gleicher Betriebsweise beider Einlassventile für die betreffende Last im Teillastbetrieb erforderlich wäre, und
- das zweite Einlassventil während eines Öffnungsvorgangs aus der Schließstellung in die maximale Offenstellung und wieder in die Schließstellung zurückgestellt und dabei in der maximalen Offenstellung gehalten wird, so dass sich eine Öffnungsdauer für das zweite Einlassventil ergibt, die über der besagten mittleren Öffnungsdauer liegt,
- wobei die Kombination der unterschiedlichen Öffnungsdauern des ersten und zweiten Einlassventils eine für die betreffende Last im Teillastbetrieb erforderliche Gesamtöffnungsdauer ergibt.

2. Verfahren nach Anspruch 1, **dadurch gekennzeichnet, dass** von einem Verbrennungszyklus zu einem nächsten das erste und zweite Einlassventil hinsichtlich ihrer Betriebsweise getauscht werden, so dass das zweite Einlassventil die kurze Öffnungsdauer und das erste Einlassventil die längere Öffnungsdauer hat.

## Claims

1. Method for the load-controlling operation of electromechanically activated charge cycle valves of an internal combustion engine which has at least two inlet valves per cylinder, in which, in the partial load operation,
- the first inlet valve, in a free oscillation process is adjusted, out of the closed position and into the maximum open position and back again into the closed position during an opening operation without being held in the maximum open position, resulting in an opening period of the first inlet valve which is shorter than an average opening period which would be necessary with an identical method of operation of both inlet valves for the respective load during partial load operation, and
- the second inlet valve is adjusted out of the closed position and into the maximum open position and back again into the closed position during an opening operation, and in the process is held in the maximum open position, resulting in an opening period for the second inlet valve which is higher than the said average opening period,
- the combination of the different opening periods of the first and second inlet valves results in an overall opening period which is necessary for the respective load during partial load operation.

2. Method according to Claim 1, **characterized in that** the first and second inlet valves are interchanged in terms of their method of operation from one combustion cycle to the next so that the second inlet valve has the short opening period and the first inlet valve has the longer opening period.

## Revendications

1. Procédé pour faire fonctionner en mode de commande de charge des soupapes de renouvellement de gaz à actionnement électromagnétique d'un moteur à combustion qui possède deux soupapes d'admission par cylindre, dans lequel en mode de charge partielle
- la première soupape d'admission, lors d'un processus d'ouverture dans un processus d'oscillation libre, passe de la position de fermeture à la position d'ouverture maximale et revient dans la position de fermeture sans être maintenue dans la position d'ouverture maximale, de sorte à obtenir une durée d'ouverture de la première soupape d'admission qui est inférieure à une durée d'ouverture moyenne qui serait nécessaire avec un mode de fonctionnement identique des deux soupapes d'admission pour la charge concernée en mode de charge partielle, et
- la deuxième soupape d'admission, lors d'un processus d'ouverture, passe de la position de fermeture à la position d'ouverture maximale et revient dans la position de fermeture en étant maintenue dans la position d'ouverture maximale, de sorte à obtenir une durée d'ouverture de la deuxième soupape d'admission qui est inférieure à ladite durée d'ouverture moyenne,
- la combinaison des durées d'ouverture différentes des première et deuxième soupapes d'admission donnant une durée d'ouverture totale nécessaire pour la charge concernée en mode de charge partielle.

2. Procédé selon la revendication 1, **caractérisé en ce que**, d'un cycle de combustion au suivant, les première et deuxième soupapes d'admission échangent leurs modes de fonctionnement, de sorte que la deuxième soupape d'admission a la durée d'ouverture la plus courte et la première soupape d'admission la durée d'ouverture la plus longue.
